# EUROPÄISCHE PATENTSCHRIFT

(11) **EP 3 383 232 B1**
(45) Veröffentlichungstag und Bekanntmachung des Hinweises auf die Patenterteilung: **28.08.2019**
(21) Anmeldenummer: 17735132.7
(22) Anmeldetag: 04.07.2017
(51) Int. Cl.: A47J 31/24, A23F 5/18

(54) **KAFFEEMASCHINE ZUR ZUBEREITUNG VON DRUCKEXTRAHIERTEN KAFFEE MIT GERINGEM PARTIKELGEHALT, VERFAHREN HIERZU UND VERWENDUNG DER KAFFEEMASCHINE**
COFFEE MACHINE FOR PREPARING COFFEE WHICH IS EXTRACTED UNDER PRESSURE AND HAS A LOW PARTICLE CONTENT, METHOD THEREFOR AND USE OF THE COFFEE MACHINE
MACHINE À CAFÉ POUR LA PRÉPARATION DE CAFÉ EXTRAIT SOUS PRESSION AVEC UNE FAIBLE TENEUR EN PARTICULES, PROCÉDÉ ASSOCIÉ ET UTILISATION DE LA MACHINE À CAFÉ

(30) Priorität: 15.07.2016 DE 102016212988
(43) Veröffentlichungstag der Anmeldung: 10.10.2018
(73) Patentinhaber: WMF Group GmbH, 73312 Geislingen/Steige (DE)
(72) Erfinder: GUSSMANN, Jochen, 73527 Schwäbsich-Gmünd (DE); SCHÜRLE, Christian, 89231 Neu-Ulm (DE); KANEKO, Yoshihiro, Kitamoto-city Saitama 364-0034 (JP)
(74) Vertreter: Pfenning, Meinig & Partner mbB
(86) Internationale Anmeldenummer: PCT/EP2017/066649
(87) Internationale Veröffentlichungsnummer: WO 2018/011020

(56) Entgegenhaltungen:
- WO-A1-2005/107540
- WO-A1-2011/097866
- DE-U- 6 939 904
- US-A- 2 626 558
- US-A1- 2008 038 441

## Beschreibung

Es wird eine Kaffeemaschine zur Zubereitung von druckextrahierten Kaffee mit geringem Partikelgehalt bereitgestellt. Die Kaffeemaschine unterscheidet sich von im Stand der Technik bekannten Maschinen zum Druckextrahieren von Kaffee dadurch, dass sie ein Filterelement zur Reduzierung des Partikelgehalts von Kaffee enthält, das stromabwärts des Brühsiebs angeordnet ist und mit dem Brühsieb und dem Auslauf fluidisch verbunden ist. Durch das Filterelement kann an der Brüheinheit durch Druck extrahierter Kaffee vor der Ausgabe am Auslauf gefiltert werden, sodass suspendierte Partikel und emulgierte Öle bestimmter Größe durch das Filterelement vom Kaffee abgetrennt werden und ein neuartiger Kaffee entsteht. Zudem kann die Kaffeemaschine klassischen druckextrahierten Kaffee bereitstellen, da der Kaffee von der Brüheinheit auch am Filterelement vorbei geleitet werden kann d.h. nicht zwangsweise über das Filterelement zum Auslauf fließen muss.

Kaffeemaschinen zur Zubereitung von druckextrahierten Kaffee-Spezialitäten (z.B. Espresso oder Cappuccino) nutzen in aller Regel Brühsysteme, bei denen das Kaffeegetränk unter Druck (ca. 4-16 bar) gebrüht wird. Hierzu werden Brühsiebe eingesetzt, welche automatisch reinigbar sind und ein Zusetzen der Brühsiebe durch Ablagerungen von Bestandteilen der Kaffeebohne (z.B. unlösliche Bestandteile der gemahlene Kaffeebohnen und Kaffeeöle) während dem Betrieb vermeiden. Das Zusetzen der Brühsiebe wird im Allgemeinen durch relativ große Siebdurchlässe (d.h. weitmaschige Sieblöcher) erreicht. Für bestimmte Kaffee-Spezialitäten wie Espresso und Cappuccino sind Partikel, welche hierbei die relativ groben Sieblöcher passieren, sogar erwünscht. Diese sind mitverantwortlich für den besonderen Geschmack dieser Kaffee-Spezialitäten.

Zudem entsteht bei der Druckbrühung dieser Kaffee-Spezialitäten durch Druckabfall am Brühsieb eine sogenannte "Crema", die sich hauptsächlich aus emulgierten Kaffeeölen zusammensetzt, aber auch Partikel und teilweise expandiertes CO₂ enthält. Die "Crema" ist bei diesen Kaffee-Spezialitäten ebenfalls erwünscht, da sie zur Optik bzw. zum Geschmack beiträgt.

Klassischer Filterkaffee weist dagegen nahezu keine Partikel und auch keine "Crema" auf. Der Grund hierfür ist, dass klassischer Filterkaffee in aller Regel ohne beaufschlagten Druck gebrüht wird d.h. der Brühdruck entspricht meist nur dem hydrostatischen Druck der Wassersäule über dem Filterboden. Zumindest werden bei der Herstellung von klassischem Filterkaffee keine Extraktionsdrücke wie bei der Espressoherstellung (ca. 4-16 bar) erreicht. Die Folge hiervon ist, dass die Herstellung von klassischem Filterkaffee mit hohen Brühzeiten verbunden ist. Da zudem bei dessen Herstellung deutlich feinere (d.h. engmaschigere) Siebe verwendet werden (Porendurchmesser im Bereich von 1 bis 50 µm) weisen die Siebböden dieser Siebe oft eine größere Fläche auf. Dies verhindert, dass die Extraktionszeit unnötig verlängert wird. Oft sind die hier verwendeten Siebe aus Papier und/oder Metall hergestellt.

Es besteht ein Bedarf im Stand der Technik nach einer Vorrichtung, die es ermöglicht, einen druckextrahierten Kaffee mit geringem Gehalt an dispergierten Partikeln bereitzustellen. Noch wünschenswerter wäre es, wenn in einer Vorrichtung sowohl druckextrahierte Kaffeespezialitäten (z.B. Espresso) und klassischer Filterkaffee bereitgestellt werden könnte.

Die WO 2005/107540 offenbart eine Kaffeemaschine, die zwei getrennte Brüheinheiten aufweist. Eine der beiden Brüheinheiten ist für die Zubereitung von gängigem druckextrahierten Kaffee verantwortlich, die andere Brüheinheit dient zur Zubereitung von klassischem Filterkaffee.

Die US 2003/0145736 A1 offenbart eine Kaffeemaschine, die zwei wasserführende Kreise aufweist. Eine der beiden Kreise dient zur Brühung des Kaffees unter hohem Druck und der andere der beiden Kreise zur Zuführung von Heißwasser oder Kaltwasser unter niedrigem Druck.

Die US 2008/0038441 A1 offenbart eine Kaffeemaschine gemäss Oberbegriff des Anspruchs 1 (siehe Figur 16). Nachteilig an den Lösungen aus dem Stand der Technik ist, dass entweder zwei getrennte Brühsysteme und Ausgabestellen für die Zubereitung der verschiedenen Arten von Kaffeegetränken erforderlich sind, was einen hohen Fertigungsaufwand, hohe Fertigungskosten und einen höheren Wartungsaufwand bedeutet oder dass die Bereitstellung von klassischem Kaffee mit einem hohen Arbeits- und Zeitaufwand verbunden ist.

Ausgehend hiervon war es die Aufgabe der vorliegenden Erfindung eine Vorrichtung bereitzustellen, welche die Probleme des Stand der Technik löst.

Die Aufgabe wird gelöst durch die Kaffeemaschine zur Zubereitung von druckextrahierten Kaffee mit geringem Partikelgehalt gemäß Anspruch 1, das Verfahren gemäß Anspruch 14 und die Verwendung gemäß Anspruch 15. Die abhängigen Ansprüche zeigen vorteilhafte Weiterbildungen auf.

Erfindungsgemäß wird eine Kaffeemaschine gemäss Anspruch 1 bereitgestellt.

Durch die Anordnung des Filterelements stromabwärts des Brühsiebs findet ein dem Brühvorgang unter Druck nachgeschalteter Filtrationsprozess statt. Dieser entzieht dem unter Druck extrahierten Kaffee feinste Bestandteile d.h. im druckextrahierten Kaffee befindliche suspendierte Partikel (Sedimente) und emulgierte Kaffeeöle. Durch Abfiltrieren der Kaffeeöle bzw. den Filtrationsvorgang an sich wird eine evtl. entstandene "Crema" abgefiltert bzw. zerstört. Durch das Filtrieren des druckextrahierten Kaffees durch das Filterelement erhält das Kaffeegetränk somit einen anderen Geschmack und aufgrund dem Fehlen der feinsten, dispergierten Bestandteile, als auch der "Crema", eine deutlich andere Optik. Folglich ist ein entscheidender Vorteil der erfindungsgemäßen Kaffeemaschine, dass ohne eine zweite Brüheinheit auf schnelle und einfache Art und Weise unterschiedliche Kaffeeprodukte bereitgestellt werden können.

Das Filterelement weist eine maximale Porengröße von 80 µm auf, die kleiner ist als die maximale Porengröße des Brühsiebs. Das Brühsieb kann eine maximale Porengröße von größer als 80 µm aufweisen, bevorzugt größer als 100 µm aufweisen.

Bevorzugt ist die Brüheinheit der Kaffeemaschine dazu geeignet, Kaffee mit einer Flüssigkeit unter einem Druck von 4 bis 16 bar zu extrahieren.

Die Kaffeemaschine kann dadurch gekennzeichnet sein, dass das Filterelement, bevorzugt reversibel,
i) in der Brüheinheit, bevorzugt in der Nähe des Brühsiebs in der Brüheinheit, optional in Kontakt mit dem Brühsieb; oder
ii) zwischen der Brüheinheit und dem Auslauf; oder
iii) am Auslauf; oder
iv) im Auslauf;
angeordnet ist, wobei das Filterelement optional innerhalb eines Gehäuses der Kaffeemaschine, bevorzugt hinter einer zu öffnenden Bedienblende der Kaffeemaschine, angeordnet ist. In einer bevorzugten Ausgestaltungsform ist das Filterelement nicht in Kontakt mit dem Brühsieb, optional nicht in Kontakt mit dem Brühsieb und nicht in Kontakt mit der Brüheinheit. In diesem Fall ist das Filterelement ein von der Brüheinheit und/oder dem Brühsieb getrenntes, separates Bauteil der Kaffeemaschine. Dies bewirkt, dass sich das Filterelement leichter aus der Kaffeemaschine entfernen und leichter in die Kaffeemaschine einsetzen lässt. Dadurch wird eine einfachere Austauschbarkeit des Filterelements erreicht und eine vereinfachte Handhabung der Kaffeemaschine bewirkt.

Das Filterelement kann
i) eine Fluidleitung enthalten, die stromaufwärts mit der Brüheinheit verbunden ist; und/oder
ii) eine Fluidleitung enthalten, die stromabwärts mit dem Auslauf, optional über eine Fluidleitung zwischen der Brüheinheit und dem Auslauf, verbunden ist; und/oder
iii) den Auslauf enthalten oder mindestens einen weiteren Auslauf enthalten.

Das Filterelement kann
i) mindestens einen Filter, der eine Dicke von 0,1 mm bis 10 mm aufweist; und/oder
ii) mindestens einen Feinfilter, der bevorzugt eine maximale Porengröße von 25 µm aufweist und besonders bevorzugt eine Dicke von 0,1 mm bis 10 mm aufweist; und/oder
iii) mindestens einen Feinstfilter, der bevorzugt eine maximale Porengröße von 10 µm aufweist und besonders bevorzugt eine Dicke von 0,1 mm bis 10 mm aufweist;
enthalten oder daraus bestehen, wobei das Filterelement bevorzugt mindestens einen Filter, mindestens einen Feinfilter und mindestens einen Feinstfilter enthält oder daraus besteht und besonders bevorzugt der mindestens eine Feinfilter stromabwärts des Filters und der mindestens eine Feinstfilter stromabwärts des Feinfilters angeordnet ist. Bevorzugt ist, dass die maximalen Porengröße (Maschigkeit) des Feinfilters kleiner ist als des Filters und die maximale Porengröße des Feinstfilters kleiner ist als des Feinfilters. Die Ausstattung des Filterelements mit einem Feinfilter und/oder Feinstfilter hat den Vorteil, dass stufenweise kleinere Partikel von dem Kaffee getrennt werden können. Zudem kann mit der resultierenden Mehrlagigkeit des Filterelements eine deutlich höhere Kapazität des Filterelements erreicht werden als wenn nur ein Filter, Feinfilter oder Feinstfilter verwendet wird. Die zur Verfügung stehende Siebfläche wird daher optimal ausgenutzt

Die maximale Porengröße eines Elements (z.B. des Filterelements bzw. des Filters, des Feinfilters und Feinstfilters und auch des Brühsiebs) kann auf einfache Art und Weise dadurch bestimmt werden, indem eine Dispersion von Partikeln bekannter Größenverteilung durch das Element geströmt wird und anschließend die Größenverteilung der Partikel auf der Seite des Eintritts der Dispersion und/oder der Seite des Austritts der Dispersion über ein mikroskopisches Verfahren bestimmt wird.

Das Filterelement, bevorzugt mindestens ein Filter, Feinfilter und/oder Feinstfilter des Filterelements, kann
i) Papier; und/oder
ii) Kunststoff; und/oder
iii) Metall;
enthalten oder daraus bestehen.
Kunststoff bzw. Metallfilter haben den Vorteil, dass sie mechanisch beständiger sind und somit längere Wartungsintervalle gegenüber Papierfiltern ermöglichen. Papierfilter haben jedoch den Vorteil, dass sie kostengünstiger zur Verfügung stehen und somit die Kaffeemaschine kostengünstiger bereitgestellt werden kann.

Das Filterelement, bevorzugt mindestens ein Filter, Feinfilter und/oder Feinstfilter des Filterelements, kann im Wesentlichen in Form eines geraden oder schiefen Zylinders ausgestaltet sein, der bevorzugt eine Grundfläche aufweist, die ausgewählt ist aus der Gruppe bestehend aus kreisförmige Grundfläche, halbkreisförmige Grundfläche, sichelförmige Grundfläche, elliptische Grundfläche und Grundfläche mit mindestens zwei Ecken.

Hierbei kann das Filterelement, bevorzugt mindestens ein Filter, Feinfilter und/oder Feinstfilter des Filterelements, von Fluid, bevorzugt einer wässrigen Lösung, besonders bevorzugt Kaffee,
i) radial angeströmt werden, bevorzugt von stromaufwärts kommenden Fluid radial in Richtung zu einer Achse des Zylinders angeströmt werden und/oder von stromabwärts kommenden Fluid radial in Richtung weg von einer Achse des Zylinders angeströmt werden; und/oder
ii) axial angeströmt werden, bevorzugt von stromaufwärts kommenden Fluid in Richtung entlang einer Achse des Zylinders von einer Oberseite des Filterelements zu einer Unterseite des Filterelements angeströmt werden und/oder von stromabwärts kommenden Fluid in Richtung entlang einer Achse des Zylinders von einer Unterseite des Filterelements zu einer Oberseite des Filterelements angeströmt werden.
Die radiale Anströmung hat den Vorteil, dass das Filterelement bei einer bestimmten Siebfläche eine kleinere maximale Raumausdehnung aufweist als bei der axialen Anströmung. Es ist hierbei von Vorteil, wenn die Engmaschigkeit der eingesetzten Siebe in Strömungsrichtung zunimmt d.h. das Fluid beispielsweise erst durch einen Filter (Außenmantel des Zylinders), dann durch einen Feinfilter (Mittelmantel des Zylinders) und anschließend durch einen Feinstfilter (Innenmantel des Zylinders) strömt. Hier hat die radiale Anströmung den Vorteil, dass sie bei vergleichbarer Filtrationsqualität ökonomischer und ökologischer ist als die axiale Anströmung, da die Fläche des Feinstfilters kleiner ist als die Fläche des Feinfilters und die Fläche des Feinfilters kleiner ist als die Fläche des Filters.

Die Brüheinheit kann eine Fluidleitung enthalten, die stromabwärts mit dem Auslauf verbunden ist und eine fluidische Verbindung von der Brüheinheit zum Auslauf unter Umgehung des Filterelements darstellt.

Die Kaffeemaschine kann stromaufwärts des Filterelements ein Bypass-Ventil enthalten, das dazu geeignet ist, zwischen einer fluidischen Verbindung von der Brüheinheit über das Filterelement zu dem Auslauf einerseits und einer fluidischen Verbindung von der Brüheinheit unter Umgehung des Filterelements zum Auslauf andererseits zu schalten, wobei das Bypass-Ventil besonders bevorzugt mit einer Steuerungseinheit verbunden ist, die dazu geeignet ist, das Ventil in Abhängigkeit von einer Eingabe durch einen Benutzer der Kaffeemaschine zu schalten.

Die Kaffeemaschine kann mindestens eine Fluidleitung, bevorzugt eine Flüssigkeitsleitung und/oder Gasleitung, besonders bevorzugt eine Gasleitung, enthalten, die
i) mit dem Filterelement verbunden ist; und/oder
ii) mit einer Fluidleitung verbunden ist, die stromaufwärts des Filterelements angeordnet ist; und/oder
iii) mit einer Fluidleitung verbunden ist, die stromabwärts des Filterelements angeordnet ist;
wobei die mindestens eine Fluidleitung bevorzugt ein Ventil, besonders bevorzugt ein Spülventil, enthält und besonders bevorzugt mit dem Ablauf verbunden ist. Diese mindestens eine Fluidleitung (insbesondere Gasleitung) hat den Vorteil, dass nach einer ersten Kaffeeausgabe Restmengen an Kaffee, der sich noch in den Fluidleitungen bzw. im Filterelement der Kaffeemaschine befindet, zum Auslauf und in eine Auffangschale der Kaffeemaschine befördert werden kann. Ein Vorteil ist eine höhere Qualität hinsichtlich Frische und Temperatur eines zweiten Kaffees, der zeitlich versetzt auf den ersten Kaffee folgt.

Ferner kann die Kaffeemaschine mindestens eine Halterung für das Filterelement enthalten, wobei die Halterung bevorzugt so konfiguriert ist, dass sie das Filterelement über eine reversible Verbindung, bevorzugt über einen Schraubverschluss, Klappverschluss und/oder Bajonettverschluss, an der Kaffeemaschine fixiert.

Die Kaffeemaschine kann
i) mindestens einen Sensor enthalten, der dazu geeignet ist, die Funktionstauglichkeit des Filterelements zu detektieren, wobei der mindestens eine Sensor bevorzugt das Filterelement kontaktiert oder in einer Fluidleitung stromaufwärts des Filterelements angeordnet ist und besonders bevorzugt ausgewählt ist aus der Gruppe bestehend aus Drucksensor, Flusssensor und Mischungen hiervon; und/oder
ii) mindestens ein Ventil, bevorzugt ein Überdruckventil, enthalten, das bevorzugt dazu geeignet ist, bei einem Druck über einem bestimmten Maximaldruck eine fluidische Verbindung von der Brüheinheit unter Umgehung des Filterelements zum Auslauf zu etablieren, wobei das Ventil besonders bevorzugt in einer Fluidleitung angeordnet ist, die parallel zum Filterelement geschaltet ist.
Der mindestens eine Sensor kann ein Signal an die Steuerung geben, ob ein Filterelement eingesetzt ist oder ob die Halterung des Filterelements sich in einem geschlossenen Zustand (z.B. flüssigkeitsdichter Zustand) befindet. Das mindestens eine Ventil stellt einen Sicherungsmechanismus dar, falls das Filterelement verstopft sein sollte. In dem Fall einer Blockade des Filterelements würde die Kaffeemaschine ohne dieses Ventil keinen Kaffee mehr über die "Filterkaffee"-Leitung ausgeben können. Durch die Gegenwart dieses Ventils kann von der Kaffeemaschine über diese Leitung zumindest auch klassischer druckgebrühter Kaffee (z.B. Espresso) ausgegeben werden.

Die Kaffeemaschine kann mindestens eine Einheit zur Beheizung des Filterelements enthalten, bevorzugt mindestens eine elektrische Heizung, besonders bevorzugt mindestens einen Heizdraht und/oder mindestens eine mit Fluid beaufschlagbare Heizleitung, insbesondere eine Heizleitung für Wasser und/oder Gas. Das Filterelement weist eine bestimmte Wärmekapzität auf, welche dem Brühgetränk Temperatur entzieht. Der Vorteil an einer Einheit zur Beheizung des Filterelements ist, dass dem von der Brüheinheit unter Druck zubereiteten Kaffee durch Passieren des Filterelements möglichst wenig Wärmeenergie entzogen wird. Die Qualität des von der Kaffeemaschine ausgegebenen Getränks hinsichtlich seiner Temperatur kann dadurch gesteigert werden.

Ferner kann die Kaffeemaschine zwischen dem Filterelement und dem Auslauf mindestens eine Fluidleitung enthalten, die mit einer Fluidquelle, bevorzugt einer Heißwasserquelle und/oder Kaltwasserquelle verbindbar ist oder verbunden ist.

Darüberhinaus wird erfindungsgemäß ein Verfahren zur Zubereitung von druckextrahierten Kaffee mit geringem Partikelgehalt bereitgestellt, umfassend die Schritte:
a) Extraktion von Kaffee mit einer Flüssigkeit unter Druck, wobei für die Extraktion ein Brühsieb eingesetzt wird; und
b) Leiten des extrahierten Kaffees durch ein Filterelement zur Reduktion des Partikelgehalts von Kaffee.

Es wird ein Filterelement verwendet, das eine maximale Porengröße von 80 µm aufweist, die kleiner ist als die maximale Porengröße des verwendeten Brühsiebs.

Die Extraktion von Kaffee mit einer Flüssigkeit unter Druck kann hierbei in einer Brüheinheit einer Kaffeemaschine stattfinden, wobei es sich bei der Flüssigkeit bevorzugt um Wasser handelt.

Der am Brühsieb abfallende Druck, der durch die Extraktion von Kaffee entsteht, kann im Bereich von 4 bis 16 bar, bevorzugt 6 bis 14 bar, besonders bevorzugt 8 bis 12 bar, liegen.

Ein am Filterelement abfallender Druck, der durch Leiten des extrahierten Kaffees durch das Filterelement entsteht, kann maximal 3 bar, bevorzugt maximal 2 bar, besonders bevorzugt maximal 1 bar, insbesondere maximal 0,5 bar, betragen.

Das Filterelement ist mit einer Brüheinheit und einem Auslauf fluidisch verbunden und ist stromabwärts der Brüheinheit und stromaufwärts des Auslaufs angeordnet.

Nach dem Leiten des extrahierten Kaffees durch ein Filterelement kann der filtrierte Kaffee zu einem Auslauf zur Ausgabe von Kaffee geleitet werden, wobei der Auslauf mit einer Brüheinheit fluidisch über mindestens eine Fluidleitung verbunden ist und stromabwärts der Brüheinheit angeordnet ist.

Das Verfahren wird mit einer erfindungsgemäßen Vorrichtung durchgeführt. Alle Merkmale, die sich auf die erfindungsgemäße Vorrichtung beziehen, sind somit auch Merkmale des erfindungsgemäßen Verfahrens.

Letztlich wird die Verwendung der erfindungsgemäßen Kaffeemaschine zur Bereitstellung von druckextrahierten Kaffee mit geringem Partikelgehalt vorgeschlagen.

Anhand der nachfolgenden Figuren soll der erfindungsgemäße Gegenstand näher erläutert werden, ohne diesen auf die hier dargestellten, spezifischen Ausgestaltungsformen einschränken zu wollen.

### Bezugszeichenliste

- 1:: Filter (Porengröße ≤ 80 µm);
- 2:: Feinfilter (Porengröße ≤ 25 µm);
- 3:: Feinstfilter (Porengröße ≤ 10 µm);
- 4:: Fluidströmungsrichtung von stromaufwärts befindlicher Brüheinheit;
- 5:: Fluidströmungsrichtung zu stromabwärts befindlichem Auslass;
- 6:: Fluidströmungsrichtung durch Filter (und Feinfilter und Feinstfilter);
- 7:: Drucksensor (Positionsschalter) an inelastischer Wandung des Filterelements;
- 8:: Dichtungselement in Filterelement;
- 9:: Wandung des Filterelements;
- 10:: Spannungsquelle;
- 11:: Überdruckventil fluidisch parallel zu Filterelement geschaltet;
- 12:: elektrisches Heizelement (z.B. PTC-Element);
- 13:: Filterelement;
- 14:: Brüheinheit zur Extraktion von Kaffee;
- 15:: Auslauf zur Ausgabe von Kaffee;
- 16:: Durchflussmengenmesser;
- 17:: Wasserzulauf;
- 18, 18':: Drucksensor oder Druckschalter;
- 19, 19':: Blende;
- 20, 20':: Druckluftzufuhr (über Luftpumpe);
- 21:: Bypass-Ventil;
- 22:: Fluidströmung während Rückspülung;
- 23:: Richtung Auffangschale der Kaffeemaschine;
- 24, 24':: Ventil;
- 25:: Fluidleitung des Filterelements, die stromaufwärts fluidisch mit Brüheinheit verbunden ist;
- 26:: Fluidleitung des Filterelements, die stromabwärts fluidisch mit dem Auslauf verbunden ist;
- 27:: Fluidleitung zwischen Brüheinheit und Auslauf, die stromaufwärts fluidisch mit dem Filterelement verbunden ist;
- 28:: Auslauf zur Ausgabe von Kaffee als Teil des Filterelements;
- 29:: Fluidleitung zwischen Brüheinheit und Auslauf, die eine fluidische Verbindung von der Brüheinheit zum Auslauf unter Umgehung des Filterelements darstellt;
- 30:: Spül-Ventil;
- 31:: Tasse zur Aufnahme von Kaffee;
- 32:: Verteilsieb;
- 33:: Brühkammer der Brüheinheit zur Aufnahme von Kaffeemehl;
- 34:: Brüheinheit;
- 35:: Dichtungselement in Brüheinheit
- 36:: Brühsieb in Brüheinheit;
- 37:: Bypass für Kaffee d.h. Strömung von Kaffee an Filterelement vorbei;

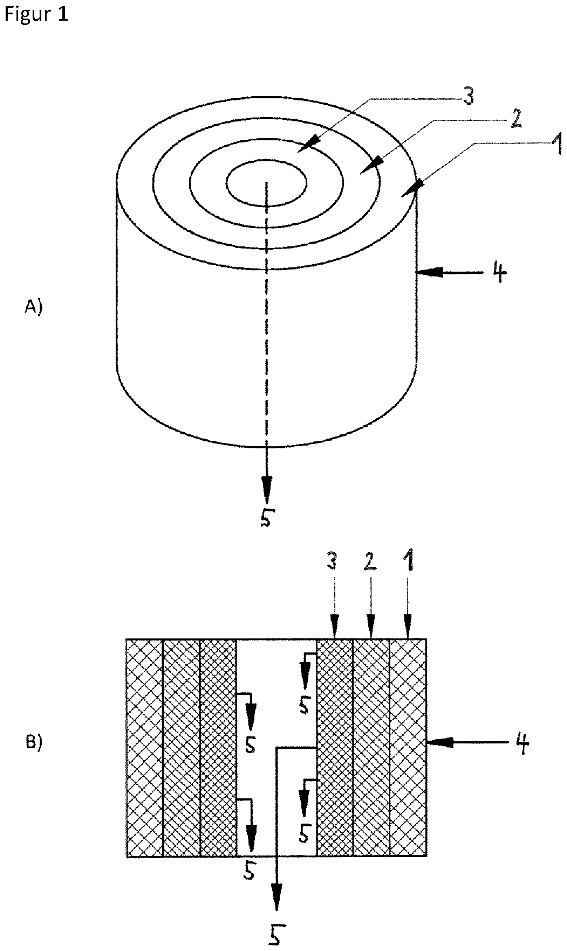

Figur 1 zeigt eine schematische Ansicht von schräg oben (Fig. 1A) und von der Seite (Fig. 1B) auf das Innenleben eines in der erfindungsgemäßen Vorrichtung und dem erfindungsgemäßen Verfahren eingesetzten Filterelements. Die dargestellte Variante weist einen Filter 1, einen Feinfilter 2 und einen Feinstfilter 3 auf, die alle in Form eines Zylinders ausgestaltet sind. Stromaufwärts von der Brüheinheit kommendes Fluid strömt in Richtung 4 und in Richtung Filter 1, wobei der Filter 1 einen äußeren Zylinder bildet. Anschließend strömt das Fluid radial in Richtung der Achse des Zylinders durch den Filter 1, den Feinfilter 2 und den Feinstfilter 3, um dann stromabwärts in Richtung 5 aus dem Auslass des Filterelements zu strömen.

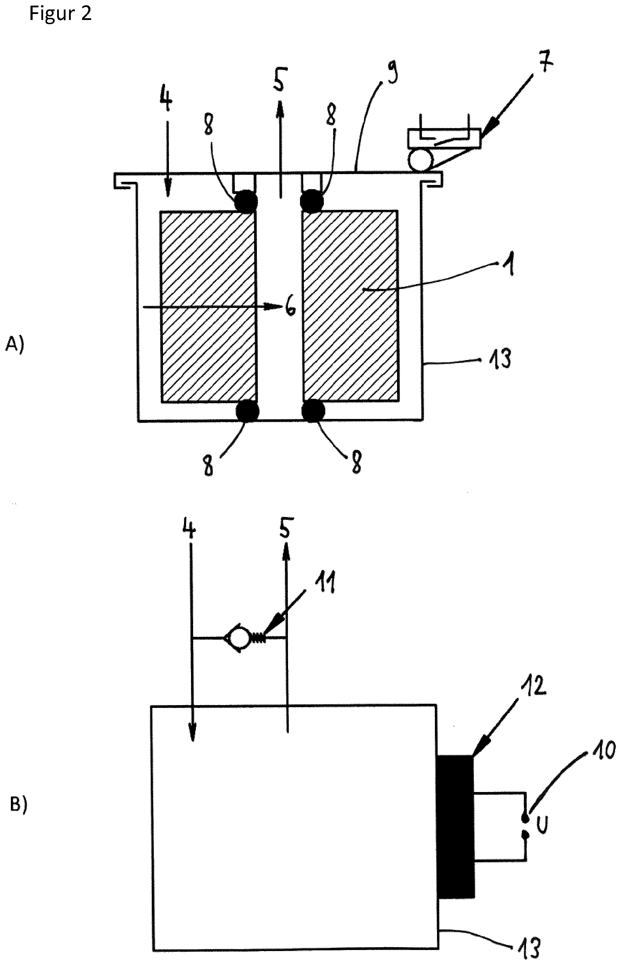

Figur 2 zeigt eine schematische Seitenansicht eines erfindungsgemäßen Filterelements 13. In Fig. 2A ist die Fluidströmungsrichtung 4 in das Filterelement und die Fluidströmungsrichtung 5 aus dem Filterelement dargestellt. Das in dem Filterelement 13 befindliche Fluid passiert den Filter 1 und evtl. weitere im Filterelement befindliche Filter (Feinfilter und/oder Feinstfilter) in Richtung 6 radial zur Achse des Zylinders, welcher durch den bzw. die Filter gebildet wird. Dichtungselemente 8 stellen sicher, dass kein Fluid (z.B. Kaffee) an dem Filter 1 vorbei strömt und das gesamte Fluid den Filter 1 passieren muss. Eine Wandung 9 des Filterelements 13 kontaktiert einen Positionsschalter 7 der Kaffeemaschine und signalisiert der Kaffeemaschine, dass das Filterelement 13 korrekt eingesetzt ist. In Fig. 2B ist zudem ein Überdruckventil 11 dargestellt, dass sich zwischen fluidischer Zu- und Ableitung des Filterelements befindet und im Falle eines kritischen Maximaldrucks im Filterelement 13 öffnet, um weiterhin den Bezug von (druckextrahiertem) Kaffee über diese Fluidleitungen zu ermöglichen. Ferner ist in Fig. 2B ein elektrisches Heizelement 12 dargestellt, das mit einer Spannungsquelle 10 verbunden ist und das Filterelement 13 auf eine gewünschte Temperatur heizen kann.

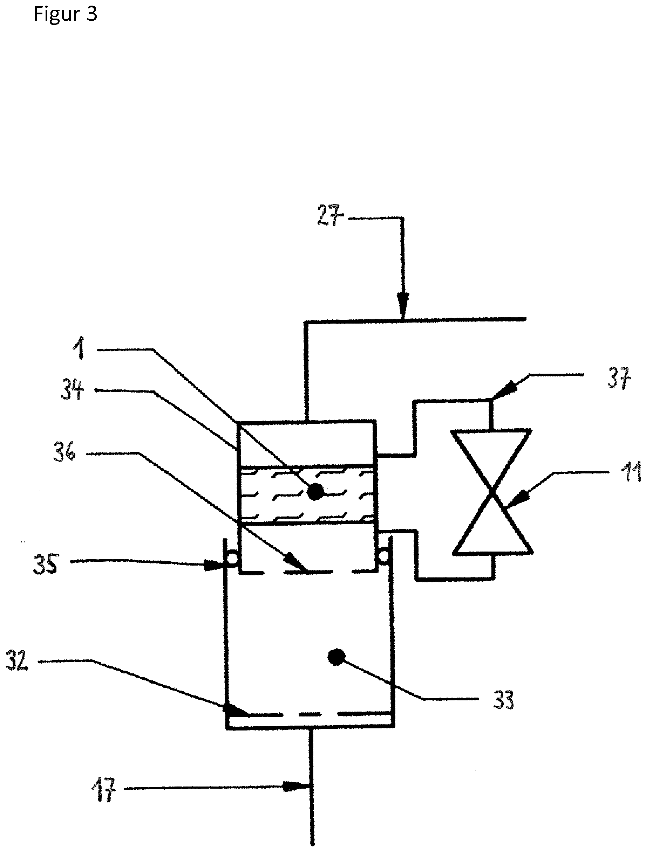

Figur 3 zeigt eine schematische Seitenansicht einer möglichen Anordnung eines erfindungsgemäßen Filterelements 13 in der Brüheinheit 34. Fluid (z.B. heißes Wasser) kommt von dem Wasserzulauf 17 und strömt in die Brüheinheit 34. Dort trifft das heiße Wasser zunächst auf einen Verteilsieb 32 und tritt anschließend in die Brühkammer 33 ein, die Kaffeemehl beinhaltet (nicht gezeigt). Durch Beaufschlagung des heißen Wassers mit Druck (z.B. 4-16 bar) passiert das heiße Wasser das Kaffeemehl, welches gegen den Brühsieb 36 gedrückt und dort zurückgehalten wird. Dichtungselemente 35 in der Brüheinheit 34 stellen sicher, dass kein mit Druck beaufschlagtes Wasser am Brühsieb 36 vorbei die Brüheinheit 34 verlässt. Das heiße Wasser löst und dispergiert Substanzen aus dem Kaffeemehl, wobei die maximale Größe der im Wasser dispergierten Stoffe von der maximalen Porengröße des Brühsiebs 36 abhängt. Klassischerweise beträgt die maximale Porengröße des Brühsiebs 36 ca. 100 µm. Der am Brühsieb extrahierte Kaffee mit hohem Partikelgehalt trifft nun auf das Filterelement 1, das eine maximale Porengröße von 80 µm aufweist, die kleiner ist als die maximale Porengröße des Brühsiebs 35. Nach Passieren des Filterelements 1 weist der Kaffee folglich einen geringeren Partikelgehalt auf, wobei die maximale Partikelgröße der enthaltenen Partikel durch die maximale Porengröße des Filterelements 1 bestimmt wird. Über die Fluidleitung 27 wird der partikelärmere Kaffee schließlich zum Auslauf transportiert und kann von dort in eine Tasse oder in einen Vorratsbehälter abgegeben werden. Fluidisch parallel zu dem Filterelement 1 geschaltet kann sich ein Überdruckventil 11 befinden. Das Überdruckventil 11 öffnet im Falle eines kritischen Überdrucks vor dem Filterelement 1 und erlaubt einen Bypass für den am Brühsieb 35 extrahierten Kaffee. Mit anderen Worten kann bei einer Verstopfung des Filterelements 1 der am Brühsieb 35 extrahierte Kaffee (klassischer druckextrahierter Kaffee) am Filterelement 1 vorbei über die Fluidleitung 27 in Richtung Auslauf strömen. Dies stellt sicher, dass auch bei einer Verstopfung des Filterelements 1 noch ein Bezug von (klassischem druckextrahierten) Kaffee möglich ist.

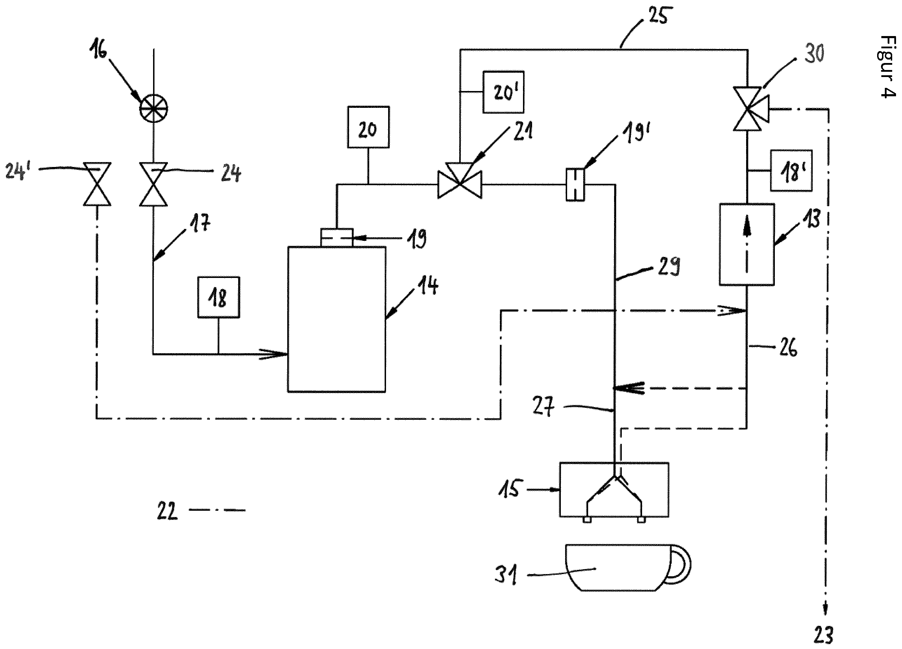

Figur 4 zeigt schematisch ein Schaltbild einer erfindungsgemäßen Kaffeemaschine Der Durchflussmesser 16 stellt sicher, dass nur eine bestimmte, vorgegebene Menge an Fluid (z.B. Wasser) in den Wasserzulauf 17 der Vorrichtung gelangt. Stromaufwärts der Brüheinheit 14 zur Extraktion von Kaffee befindet sich ein Drucksensor 18 (oder Druckschalter) zur Messung des Brühdrucks. Stromabwärts der Brüheinheit ist in dieser Ausgestaltungsform eine Blende 19 angeordnet, durch die der extrahierte Kaffee fließt. Ferner kann die Kaffeemaschine eine Steuerung aufweisen, die von einem Benutzer der Kaffeemaschine bedient werden kann. Die Steuerung kann ein Bypass-Ventil 21 ansteuern, um die Strömungsrichtung des extrahierten Kaffees (z.B. entlang verschiedener Fluidleitungen der Kaffeemaschine) zu beeinflussen. Das Bypass-Ventil 21 kann natürlich auch manuell angesteuert werden. Ist nur ein klassischer druckextrahierte Kaffee (wie z.B. Espresso) gewünscht, so ist das Bypass-Ventil 21 hier so geschaltet, dass der extrahierte Kaffee über die Blende 19' und die Fluidleitungen 29, 27 zum Auslauf 15 strömt, wo der klassische, druckextrahierte (partikelreiche) Kaffee schließlich (hier in die Tasse 31) abgegeben wird. Ist dagegen ein druckextrahierter Kaffee mit geringem Partikelgehalt, d.h. ein dem klassischen Filterkaffee ähnlicher Kaffee, gewünscht, so ist das Bypass-Ventil 21 so geschaltet, dass der extrahierte Kaffee über die Fluidleitung 25 und durch das Spül-Ventil 30 zu dem Filterelement 13 und schließlich über die Fluidleitung 26 zum Auslauf 15 strömt, wo der partikelarme Kaffee schließlich (hier in die Tasse 31) abgegeben wird. Hierbei werden dem in der Brüheinheit 14 extrahierten Kaffee durch das Filterelement 13 suspendierte Partikel und emulgierte Partikel (z.B. Kaffeeöltröpfchen) entzogen. Stromaufwärts des Filterelements 13 ist ein Drucksensor 18' (oder Druckschalter) angeordnet, dass den Druck vor dem Filterelement 13 überwacht und gegebenenfalls ein Überdruckventil am Filterelement 13 öffnet, um Kaffee am Filterelement 13 vorbei über Fluidleitung 26 in Richtung Auslauf 15 zu befördern. Entlang des Transportweges des extrahierten Kaffees sind Druckluftzufuhren 20, 20' (über Luftpumpe) angeordnet, um restlichen in den Fluidleitungen 25, 26, 27, 29 befindlichen Kaffee, insbesondere vor einem weiteren Bezug von Kaffee, aus den Fluidleitungen in die Auffangschale der Kaffeemaschine zu befördern. Sollte das Filterelement 13 während des Betriebs der Kaffeemaschine verstopfen, so besteht die Möglichkeit, Fluid (z.B. Wasser) aus einer Fluidquelle über Öffnen eines Ventils 24' in entgegen gesetzter Richtung 22 (stromaufwärts) durch das Filterelement 13 in Richtung 23 Auffangschale der Kaffeemaschine strömen zulassen, und somit eine Rückspülung und Reinigung des Filterelements 13 zu bewirken.

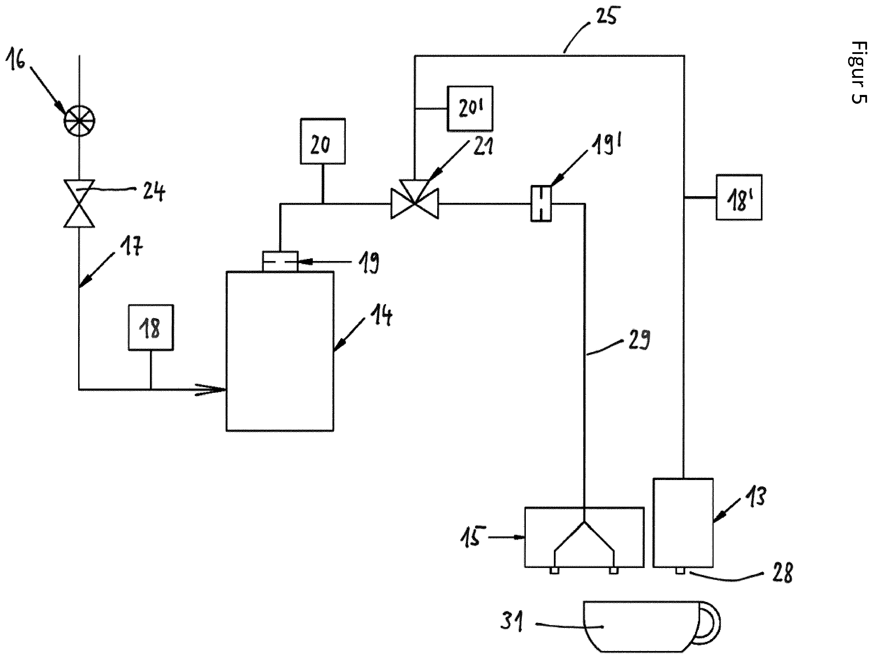

Figur 5 zeigt schematisch ein Schaltbild einer Variante einer erfindungsgemäßen Kaffeemaschine. Der Aufbau dieser Kaffeemaschine entspricht im Wesentlichen dem in Figur 4 dargestellten Aufbau. Die Bezugszeichen aus Figur 4 gelten für Figur 5 entsprechend. Ein Unterschied der hier dargestellten Vorrichtung zur Vorrichtung der Figur 4 ist, dass das Filterelement 13 im Bereich des Auslaufs 15 zur Ausgabe von Kaffee angeordnet ist bzw. mit diesem reversibel verbunden ist. In dieser Hinsicht benötigt das Filterelement 13 auch keine Fluidleitung zum Auslauf 15, sondern kann selbst einen Auslauf 28 zur Ausgabe von Kaffee aufweisen. Da sich der Auslauf 15 im Außenbereich der Kaffeemaschine befindet, ist in diesem Fall auch das Filterelement 13 im Außenbereich der Kaffeemaschine angeordnet. Diese Anordnung hat somit den Vorteil, dass eine einfache und schnelle Austauschbarkeit des Filterelements 13 gewährleistet ist.

## Patentansprüche

1. Kaffeemaschine zur Zubereitung von druckextrahierten Kaffee mit geringem Partikelgehalt, enthaltend
a) eine Brüheinheit (14) zur Extraktion von Kaffee mit einer Flüssigkeit unter Druck, wobei die Brüheinheit einen Brühsieb enthält; und
b) einen Auslauf (15) zur Ausgabe von Kaffee, wobei der Auslauf stromabwärts der Brüheinheit angeordnet ist;
wobei die Kaffeemaschine ein Filterelement (13) zur Reduktion des Partikelgehalts von Kaffee enthält, das stromabwärts des Brühsiebs angeordnet ist und mit dem Brühsieb und dem Auslauf fluidisch verbunden ist,
**dadurch gekennzeichnet, dass** das Filterelement mindestens einen Filter, der eine maximale Porengröße von 80 µm aufweist, enthält oder daraus besteht.

2. Kaffeemaschine gemäß Anspruch 1, **dadurch gekennzeichnet, dass** das Filterelement, bevorzugt reversibel,
i) in der Brüheinheit, bevorzugt in der Nähe des Brühsiebs in der Brüheinheit, optional in Kontakt mit dem Brühsieb; oder
ii) zwischen der Brüheinheit und dem Auslauf; oder
iii) am Auslauf; oder
iv) im Auslauf;
angeordnet ist, wobei das Filterelement optional innerhalb eines Gehäuses der Kaffeemaschine, bevorzugt hinter einer zu öffnenden Bedienblende der Kaffeemaschine, angeordnet ist.

3. Kaffeemaschine gemäß einem der vorhergehenden Ansprüche, **dadurch gekennzeichnet, dass** das Filterelement
i) eine Fluidleitung enthält, die stromaufwärts mit der Brüheinheit verbunden ist; und/oder
ii) eine Fluidleitung enthält, die stromabwärts mit dem Auslauf, optional über eine Fluidleitung zwischen der Brüheinheit und dem Auslauf, verbunden ist; und/oder
iii) den Auslauf enthält oder mindestens einen weiteren Auslauf enthält.

4. Kaffeemaschine gemäß einem der vorhergehenden Ansprüche, **dadurch gekennzeichnet, dass** das Filterelement
i) mindestens einen Filter, der eine Dicke von 0,1 mm bis 10 mm aufweist; und/oder
ii) mindestens einen Feinfilter enthält, der bevorzugt eine maximale Porengröße von 25 µm aufweist und besonders bevorzugt eine Dicke von 0,1 mm bis 10 mm aufweist; und/oder
iii) mindestens einen Feinstfilter enthält, der bevorzugt eine maximale Porengröße von 10 µm aufweist und besonders bevorzugt eine Dicke von 0,1 mm bis 10 mm aufweist;
enthält oder daraus besteht, wobei das Filterelement bevorzugt mindestens einen Filter, mindestens einen Feinfilter und mindestens einen Feinstfilter enthält oder daraus besteht und besonders bevorzugt der mindestens eine Feinfilter stromabwärts des Filters und der mindestens eine Feinstfilter stromabwärts des Feinfilters angeordnet ist.

5. Kaffeemaschine gemäß dem vorhergehenden Anspruch, **dadurch gekennzeichnet, dass** das Filterelement, bevorzugt mindestens ein Filter, Feinfilter und/oder Feinstfilter des Filterelements,
i) Papier; und/oder
ii) Kunststoff; und/oder
iii) Metall;
enthält oder daraus besteht.

6. Kaffeemaschine gemäß einem der beiden vorhergehenden Ansprüche, **dadurch gekennzeichnet, dass** das Filterelement, bevorzugt mindestens ein Filter, Feinfilter und/oder Feinstfilter des Filterelements, im Wesentlichen in Form eines geraden oder schiefen Zylinders ausgestaltet ist, der bevorzugt eine Grundfläche aufweist, die ausgewählt ist aus der Gruppe bestehend aus kreisförmige Grundfläche, halbkreisförmige Grundfläche, sichelförmige Grundfläche, elliptische Grundfläche und Grundfläche mit mindestens zwei Ecken.

7. Kaffeemaschine gemäß dem vorhergehenden Anspruch, **dadurch gekennzeichnet, dass** das Filterelement, bevorzugt mindestens ein Filter, Feinfilter und/oder Feinstfilter des Filterelements, von Fluid, bevorzugt einer wässrigen Lösung, besonders bevorzugt Kaffee,
i) radial angeströmt wird, bevorzugt von stromaufwärts kommenden Fluid radial in Richtung zu einer Achse des Zylinders angeströmt wird und/oder von stromabwärts kommenden Fluid radial in Richtung weg von einer Achse des Zylinders angeströmt wird; und/oder
ii) axial angeströmt wird, bevorzugt von stromaufwärts kommenden Fluid in Richtung entlang einer Achse des Zylinders von einer Oberseite des Filterelements zu einer Unterseite des Filterelements angeströmt wird und/oder von stromabwärts kommenden Fluid in Richtung entlang einer Achse des Zylinders von einer Unterseite des Filterelements zu einer Oberseite des Filterelements angeströmt wird.

8. Kaffeemaschine gemäß einem der vorhergehenden Ansprüche, **dadurch gekennzeichnet, dass** die Brüheinheit eine Fluidleitung enthält, die stromabwärts mit dem Auslauf verbunden ist und eine fluidische Verbindung von der Brüheinheit zum Auslauf unter Umgehung des Filterelements darstellt.

9. Kaffeemaschine gemäß einem der vorhergehenden Ansprüche, **dadurch gekennzeichnet, dass** die Kaffeemaschine stromaufwärts des Filterelements ein Bypass-Ventil enthält, das dazu geeignet ist, zwischen einer fluidischen Verbindung von der Brüheinheit über das Filterelement zu dem Auslauf einerseits und einer fluidischen Verbindung von der Brüheinheit unter Umgehung des Filterelements zum Auslauf andererseits zu schalten, wobei das Bypass-Ventil besonders bevorzugt mit einer Steuerungseinheit verbunden ist, die dazu geeignet ist, das Ventil in Abhängigkeit von einer Eingabe durch einen Benutzer der Kaffeemaschine zu schalten.

10. Kaffeemaschine gemäß einem der vorhergehenden Ansprüche, **dadurch gekennzeichnet, dass** die Kaffeemaschine mindestens eine Fluidleitung, bevorzugt eine Flüssigkeitsleitung und/oder Gasleitung, besonders bevorzugt eine Gasleitung, enthält, die
i) mit dem Filterelement verbunden ist; und/oder
ii) mit einer Fluidleitung verbunden ist, die stromaufwärts des Filterelements angeordnet ist; und/oder
iii) mit einer Fluidleitung verbunden ist, die stromabwärts des Filterelements angeordnet ist;
wobei die mindestens eine Fluidleitung bevorzugt ein Ventil, besonders bevorzugt ein Spülventil, enthält und besonders bevorzugt mit dem Ablauf verbunden ist.

11. Kaffeemaschine gemäß einem der vorhergehenden Ansprüche, **dadurch gekennzeichnet, dass** die Kaffeemaschine mindestens eine Halterung für das Filterelement enthält, wobei die Halterung bevorzugt so konfiguriert ist, dass sie das Filterelement über eine reversible Verbindung, bevorzugt über einen Schraubverschluss, Klappverschluss und/oder Bajonettverschluss, an der Kaffeemaschine fixiert.

12. Kaffeemaschine gemäß einem der vorhergehenden Ansprüche, **dadurch gekennzeichnet, dass** die Kaffeemaschine
i) mindestens einen Sensor enthält, der dazu geeignet ist, die Funktionstauglichkeit des Filterelements zu detektieren, wobei der mindestens eine Sensor bevorzugt das Filterelement kontaktiert oder in einer Fluidleitung stromaufwärts des Filterelements angeordnet ist und besonders bevorzugt ausgewählt ist aus der Gruppe bestehend aus Drucksensor, Flusssensor und Mischungen hiervon; und/oder
ii) mindestens ein Ventil, bevorzugt ein Überdruckventil, enthält, das bevorzugt dazu geeignet ist, bei einem Druck über einem bestimmten Maximaldruck eine fluidische Verbindung von der Brüheinheit unter Umgehung des Filterelements zum Auslauf zu etablieren, wobei das Ventil besonders bevorzugt in einer Fluidleitung angeordnet ist, die parallel zum Filterelement geschaltet ist; und/oder
iii) mindestens eine Einheit zur Beheizung des Filterelements enthält, bevorzugt mindestens eine elektrische Heizung, besonders bevorzugt mindestens einen Heizdraht und/oder mindestens eine mit Fluid beaufschlagbare Heizleitung, insbesondere eine Heizleitung für Wasser und/oder Gas.

13. Kaffeemaschine gemäß einem der vorhergehenden Ansprüche, **dadurch gekennzeichnet, dass** die Kaffeemaschine zwischen dem Filterelement und dem Auslauf mindestens eine Fluidleitung enthält, die mit einer Fluidquelle, bevorzugt einer Heißwasserquelle und/oder Kaltwasserquelle verbindbar ist oder verbunden ist.

14. Verfahren zur Zubereitung von druckextrahierten Kaffee mit geringem Partikelgehalt, umfassend die Schritte
a) Extraktion von Kaffee mit einer Flüssigkeit unter Druck, wobei für die Extraktion ein Brühsieb eingesetzt wird; und
b) Leiten des extrahierten Kaffees durch ein Filterelement zur Reduktion des Partikelgehalts von Kaffee;
**dadurch gekennzeichnet, dass** das Verfahren mit einer Kaffeemaschine gemäß einem der Ansprüche 1 bis 13 durchgeführt wird.

15. Verwendung der Kaffeemaschine gemäß einem der Ansprüche 1 bis 13 zur Bereitstellung von druckextrahierten Kaffee mit geringem Partikelgehalt.

## Claims

1. Coffee machine for the preparation of pressure-extracted coffee with a low particle content, comprising
a) a brewing unit (14) for the extraction of coffee with a liquid under pressure, the brewing unit comprising a brewing sieve; and
b) an outlet (15) for dispensing coffee, the outlet being disposed downstream of the brewing unit;
wherein the coffee machine comprises a filter element (13) for reducing the particle content of coffee, which is disposed downstream of the brewing sieve and is connected fluidically to the brewing sieve and to the outlet,
**characterized in that** the filter element comprises at least one filter which has a maximum pore size of 80 µm, or consists thereof.

2. Coffee machine according to claim 1, **characterised in that** the filter element is disposed, preferably reversibly,
i) in the brewing unit, preferably near the brewing sieve in the brewing unit, optionally in contact with the brewing sieve; or
ii) between the brewing unit and the outlet; or
iii) at the outlet; or
iv) in the outlet;
the filter element being disposed optionally within a housing of the coffee machine, preferably behind a control panel of the coffee machine which is to be opened.

3. Coffee machine according to one of the preceding claims, **characterised in that** the filter element
i) comprises a fluid pipe which is connected upstream to the brewing unit; and/or
ii) comprises a fluid pipe which is connected downstream to the outlet, optionally via a fluid pipe between the brewing unit and the outlet; and/or
iii) comprises the outlet or comprises at least one further outlet.

4. Coffee machine according to one of the preceding claims, **characterised in that** the filter element
i) comprises at least one filter which has a thickness of 0.1 mm to 10 mm; and/or
ii) comprises at least one fine filter which preferably has a maximum pore size of 25 µm, and particularly preferably has a thickness of 0.1 mm to 10 mm; and/or
iii) comprises at least one ultrafine filter which preferably has a maximum pore size of 10 µm, and particularly preferably has a thickness of 0.1 mm to 10 mm;
or consists thereof, the filter element preferably comprising at least one filter, at least one fine filter and at least one ultrafine filter or consisting thereof, and particularly preferably the at least one fine filter being disposed downstream of the filter and the at least one ultrafine filter downstream of the fine filter.

5. Coffee machine according to the preceding claim, **characterised in that** the filter element, preferably at least one filter, fine filter and/or ultrafine filter of the filter element, comprises
i) paper; and/or
ii) plastic material; and/or
iii) metal;
or consists thereof.

6. Coffee machine according to one of the two preceding claims, **characterised in that** the filter element, preferably at least one filter, fine filter and/or ultrafine filter of the filter element, is essentially configured in the form of a linear or diagonal cylinder which preferably has a base which is selected from the group consisting of circular base, semi-circular base, crescent-shaped base, elliptical base and base with at least two corners.

7. Coffee machine according to the preceding claim, **characterised in that** the filter element, preferably at least one filter, fine filter and/or ultrafine filter of the filter element, is subjected, with fluid, preferably an aqueous solution, particularly preferably coffee,
i) to a flow radially, preferably is subjected to a flow with fluid coming upstream radially in the direction towards an axis of the cylinder and/or is subjected to a flow with fluid coming downstream radially in the direction away from an axis of the cylinder; and/or
ii) to a flow axially, preferably is subjected to a flow with fluid coming upstream in the direction along an axis of the cylinder from an upper-side of the filter element to an underside of the filter element and/or is subjected to a flow with fluid coming downstream in the direction along an axis of the cylinder from an underside of the filter element to an upper-side of the filter element.

8. Coffee machine according to one of the preceding claims, **characterised in that** the brewing unit comprises a fluid pipe which is connected downstream to the outlet and represents a fluidic connection from the brewing unit to the outlet, circumventing the filter element.

9. Coffee machine according to one of the preceding claims, **characterised in that** the coffee machine comprises a bypass valve upstream of the filter element, which valve is suitable for switching between a fluidic connection from the brewing unit via the filter element to the outlet, on the one hand, and a fluidic connection from the brewing unit, circumventing the filter element, towards the outlet, on the other hand, wherein the bypass valve is particularly preferably connected to a control unit which is suitable for switching the valve as a function of an input by a user of the coffee machine.

10. Coffee machine according to one of the preceding claims, **characterised in that** the coffee machine comprises at least one fluid pipe, preferably a liquid pipe and/or gas pipe, particularly preferably a gas pipe, which
i) is connected to the filter element; and/or
ii) is connected to a fluid pipe which is disposed upstream of the filter element; and/or
iii) is connected to a fluid pipe which is disposed downstream of the filter element;
the at least one fluid pipe comprising preferably a valve, particularly preferably a flush valve, and being connected, particularly preferably, to the outlet.

11. Coffee machine according to one of the preceding claims, **characterised in that** the coffee machine comprises at least one mounting for the filter element, the mounting being configured preferably such that it fixes the filter element via a reversible connection, preferably via a screw closure, flap closure and/or bayonet closure, to the coffee machine.

12. Coffee machine according to one of the preceding claims, **characterised in that** the coffee machine
i) comprises at least one sensor which is suitable for detecting the functional capability of the filter element, the at least one sensor preferably contacting the filter element or being disposed in a fluid pipe upstream of the filter element and being selected, particularly preferably, from the group consisting of pressure sensor, flow sensor and mixtures hereof; and/or
ii) comprises at least one valve, preferably a pressure relief valve which is preferably suitable for establishing, at a pressure above a specific maximum pressure, a fluidic connection from the brewing unit to the outlet by circumventing the filter element, the valve being particularly preferably disposed in a fluid pipe which is connected in parallel to the filter element; and/or
iii) comprises at least one unit for heating the filter element, preferably at least one electrical heating unit, particularly preferably at least one heating wire and/or at least one heating pipe which can have fluid applied, in particular a heating pipe for water and/or gas.

13. Coffee machine according to one of the preceding claims, **characterised in that** the coffee machine comprises at least one fluid pipe between the filter element and the outlet, which fluid pipe is connectable or is connected to a fluid source, preferably to a hot water source and/or cold water source.

14. Method for the preparation of pressure-extracted coffee with a low particle content, comprising the steps:
a) extraction of coffee with a liquid under pressure, a brewing sieve being used for the extraction; and
b) conducting the extracted coffee through a filter element for reducing the particle content of coffee
**characterized in that** the method is implemented by a coffee machine according to one of the claims 1 to 13.

15. Use of the coffee machine according to one of the claims 1 to 13 for the preparation of pressure-extracted coffee with a low particle content.

## Revendications

1. Machine à café pour la préparation de café extrait sous pression, avec une faible teneur en particules, comprenant :
a) une unité d'infusion (14) pour l'extraction de café avec un liquide sous pression, l'unité d'infusion comprenant un tamis d'infusion ; et
b) une sortie (15) pour la distribution du café, la sortie étant disposée en aval de l'unité d'infusion ;
la machine à café comprenant un élément de filtrage (13) pour la réduction de la teneur en particules du café, qui est disposé en aval du tamis d'infusion et qui est relié de manière fluidique avec le tamis d'infusion et la sortie,
**caractérisée en ce que** l'élément de filtrage comprend ou est constitué d'au moins un filtre, qui présente une taille de pore maximale de 80 µm.

2. Machine à café selon la revendication 1, **caractérisée en ce que** l'élément de filtrage est disposé, de préférence de manière réversible,
i) dans l'unité d'infusion, de préférence à proximité du tamis d'infusion dans l'unité d'infusion, en option en contact avec le tamis d'infusion ; ou
ii) entre l'unité d'infusion et la sortie ; ou
iii) au niveau de la sortie ; ou
iv) dans la sortie ;
l'élément de filtrage étant disposé, en option, à l'intérieur d'un boîtier de la machine à café, de préférence derrière un panneau de commande à ouvrir de la machine à café.

3. Machine à café selon l'une des revendications précédentes, **caractérisée en ce que** l'élément de filtrage
i) comprend une conduite de fluide qui est reliée, en amont, avec l'unité d'infusion ; et/ou
ii) comprend une conduite de fluide, qui est reliée, en aval, avec la sortie, en option par l'intermédiaire d'une conduite de fluide, entre l'unité d'infusion et la sortie ; et/ou
iii) comprend la sortie ou comprend au moins une autre sortie.

4. Machine à café selon l'une des revendications précédentes, **caractérisée en ce que** l'élément de filtrage comprend ou est constitué
i) d'au moins un filtre qui présente une épaisseur de 0,1 mm à 10 mm ; et/ou
ii) d'un filtre à particules fines, qui présente de préférence une taille de pores maximale de 25 µm et plus particulièrement de préférence une épaisseur de 0,1 mm à 10 mm ; et/ou
iii) d'au moins un filtre à particules ultrafines, qui présente de préférence une taille de pores maximale de 10 µm et plus particulièrement de préférence une épaisseur de 0,1 mm à 10 mm ;
l'élément de filtrage comprenant ou étant constitué de préférence d'au moins un filtre, d'au moins un filtre à particules fines et d'au moins un filtre à particules ultrafines, et plus particulièrement de préférence l'au moins un filtre à particules fines étant disposé en aval du filtre et l'au moins un filtre à particules ultrafines étant disposé en aval du filtre à particules fines.

5. Machine à café selon la revendication précédente, **caractérisée en ce que** l'élément de filtrage, de préférence au moins un filtre, un filtre à particules fines et/ou un filtre à particules ultrafines comprend ou est constitué
i) de papier ; et/ou
ii) de matière plastique ; et/ou
iii) de métal.

6. Machine à café selon l'une des deux revendications précédentes, **caractérisée en ce que** l'élément de filtrage, de préférence au moins un filtre, un filtre à particules fines et/ou un filtre à particules ultrafines de l'élément de filtrage, présente globalement la forme d'un cylindre droit ou oblique, qui comprend de préférence une surface de base sélectionnée parmi le groupe constitué d'une surface de base circulaire, d'une surface de base semi-circulaire, d'une surface de base en forme de faucille, d'une surface de base elliptique et d'une surface de base avec au moins deux angles.

7. Machine à café selon la revendication précédente, **caractérisée en ce que** l'élément de filtrage, de préférence au moins un filtre, un filtre à particules fines et/ou un filtre à particules ultrafines est traversé par un fluide, de préférence une solution aqueuse, plus particulièrement de préférence du café,
i) de manière radiale, de préférence traversé radialement par un fluide provenant de l'amont, en direction d'un axe du cylindre et/ou traversé radialement par un fluide provenant de l'aval s'éloignant d'un axe du cylindre ; et/ou
ii) de manière axiale, de préférence traversé par un fluide provenant de l'amont, dans une direction le long d'un axe du cylindre, d'un côté supérieur de l'élément de filtrage vers un côté inférieur de l'élément de filtrage et/ou traversé par un fluide provenant de l'aval, dans une direction le long d'un axe du cylindre d'un côté inférieur de l'élément de filtrage vers un côté supérieur de l'élément de filtrage.

8. Machine à café selon l'une des revendications précédentes, **caractérisée en ce que** l'unité d'infusion comprend une conduite de fluide qui est reliée en aval avec la sortie, et qui constitue une liaison fluidique de l'unité d'infusion vers la sortie en contournant l'élément de filtrage.

9. Machine à café selon l'une des revendications précédentes, **caractérisée en ce que** la machine à café comprend, en amont de l'élément de filtrage, une soupape de dérivation, qui est conçue pour commuter entre une liaison fluidique de l'unité d'infusion par l'intermédiaire de l'élément de filtrage vers la sortie d'une part et une liaison fluidique de l'unité d'infusion en contournant l'élément de filtrage vers la sortie d'autre part, la soupape de dérivation étant reliée plus particulièrement de préférence avec une unité de commande qui est conçue pour commuter la soupape en fonction d'une entrée d'un utilisateur de la machine à café.

10. Machine à café selon l'une des revendications précédentes, **caractérisée en ce que** la machine à café comprend au moins une conduite de fluide, de préférence une conduite de liquide et/ou une conduite de gaz, plus particulièrement de préférence une conduite de gaz, qui
i) est reliée avec l'élément de filtrage ; et/ou
ii) est reliée avec une conduite de fluide qui est disposée en amont de l'élément de filtrage ; et/ou
iii) est reliée avec une conduite de fluide qui est disposée en aval de l'élément de filtrage ;
l'au moins une conduite de fluide comprenant de préférence une soupape, plus particulièrement de préférence une soupape de rinçage et plus particulièrement de préférence étant reliée avec l'évacuation.

11. Machine à café selon l'une des revendications précédentes, **caractérisée en ce que** la machine à café comprend au moins un support pour l'élément de filtrage, le support étant conçu de préférence de façon à fixer l'élément de filtrage à la machine à café par l'intermédiaire d'une liaison réversible, de préférence par l'intermédiaire d'une fermeture vissée, d'une fermeture à charnière et/ou d'une fermeture à baïonnette.

12. Machine à café selon l'une des revendications précédentes, **caractérisée en ce que** la machine à café
i) comprend au moins un capteur qui est conçu pour détecter la capacité de fonctionnement de l'élément de filtrage, l'au moins un capteur étant de préférence en contact avec l'élément de filtrage ou étant disposé dans une conduite de fluide en amont de l'élément de filtrage et plus particulièrement de préférence étant sélectionné dans le groupe constitué d'un capteur de pression, d'un capteur de débit et de mélanges de ceux-ci ; et/ou
ii) comprend au moins une soupape, de préférence une soupape de surpression, qui est de préférence conçue pour établir, dans le cas d'une pression supérieure à une pression maximale déterminée, une liaison fluidique de l'unité d'infusion vers la sortie en contournant l'élément de filtrage, la soupape étant disposée plus particulièrement de préférence dans une conduite de fluide, qui est branchée parallèlement à l'élément de filtrage ; et/ou
iii) comprend au moins une unité pour le chauffage de l'élément de filtrage, de préférence au moins un chauffage électrique, plus particulièrement de préférence au moins un fil de chauffage et/ou au moins une conduite de chauffage pouvant être alimentée en fluide, plus particulièrement une conduite de chauffage pour de l'eau et/ou un gaz.

13. Machine à café selon l'une des revendications précédentes, **caractérisée en ce que** la machine à café comprend, entre l'élément de filtrage et la sortie, au moins une conduite de fluide, qui peut être reliée ou est reliée avec une source de fluide, de préférence une source d'eau chaude et/ou une source d'eau froide.

14. Procédé de préparation de café extrait sous pression avec une faible teneur en particules, comprenant les étapes suivantes :
a) extraction de café avec un liquide sous pression, un tamis d'infusion étant utilisé pour l'extraction ; et
b) conduction du café extrait à travers l'élément de filtrage pour la réduction de la teneur en particules du café ;
**caractérisé en ce que** le procédé est exécuté avec une machine à café selon l'une des revendications 1 à 13.

15. Utilisation de la machine à café selon l'une des revendications 1 à 13, pour la préparation d'un café extrait sous pression avec une faible teneur en particules.
